# EUROPÄISCHE PATENTSCHRIFT

(11) **EP 3 231 631 B1**
(45) Veröffentlichungstag und Bekanntmachung des Hinweises auf die Patenterteilung: **11.07.2018**
(21) Anmeldenummer: 17165379.3
(22) Anmeldetag: 06.04.2017
(51) Int. Cl.: B29C 70/30, B60B 5/02, B60B 1/00, B60B 21/02

(54) **DRAHTREIFENFELGE MIT GEWICKELTER INNENHÜLSE UND FLECHTAUSSENHÜLSE SOWIE VERFAHREN ZU DEREN HERSTELLUNG**
WIRED-ON TYRE RIM WITH A COILED INNER SLEEVE, AND WOVEN OUTER SLEEVE AND METHOD FOR THE PRODUCTION THEREOF
JANTE POUR PNEU AYANT UN MANCHON INTERNE ENROULÉ ET UN MANCHON EXTERNE TRESSÉ ET PROCÉDÉ DE FABRICATION

(30) Priorität: 08.04.2016 DE 102016106529
(43) Veröffentlichungstag der Anmeldung: 18.10.2017
(73) Patentinhaber: Munich Composites GmbH, 82024 Taufkirchen (DE)
(72) Erfinder: Fröhlich, Felix, 82024 Taufkirchen (DE); Lichtenberg, Christian, 82024 Taufkirchen (DE); Rüger, Olaf, 82024 Taufkirchen (DE); Wachter, Florian, 81927 München (DE)
(74) Vertreter: Winter, Brandl, Fürniss, Hübner, Röss, Kaiser, Polte - Partnerschaft mbB

(56) Entgegenhaltungen:
- WO-A1-2011/096805
- CN-A- 102 241 143
- DE-A1- 4 425 592
- DE-A1-102007 042 198
- DE-T2- 69 822 460
- JP-A- S61 244 602
- US-A1- 2012 242 138

## Beschreibung

Die Erfindung betrifft eine Drahtreifenfelge für ein Fahrrad, wobei aus dem Stand der Technik bereits zahlreiche Drahtreifenfelgen bekannt sind, also solche Felgen, die Felgenhörner besitzen, an denen Wulste eines Reifens, wie etwa drahtverstärkte oder kevlarverdickte Wulste, festhaltend angreifen können. Solche Drahtreifenfelgen werden üblicherweise bei Fahrrädern, wie Rennrädern, Triathlonrädern, Crossrädern, Trekkingrädern und Mountainbikes eingesetzt. Solche Drahtreifenfelgen können aber auch bei anderen muskel- und/oder motorisch angetriebenen Fahrzeugen eingesetzt werden.

Üblicherweise werden Drahtreifenfelgen aus Stahl und seit geraumer Zeit auch aus Leichtmetalllegierungen gefertigt. In neuester Zeit haben sich auch immer mehr Kunststoffmaterialien durchgesetzt, wie Faserverbundwerkstoffe. Besonders bewährt haben sich Faserverbundwerkstoffe, in denen Kohlefasern, Aramidfasern und/oder Glasfasern eingesetzt werden. Gattungsgemäßer Stand der Technik ist aus der DE 44 25 592 A1, der DE 10 2007 042 198 A1, der EP 1 231 077 A2, der DE 698 22 460 T2 sowie der DE 10 2015 102 466 A1 bekannt. Auch ist der Stand der Technik aus der CN 102 241 143 A, der DE 698 22 460 T2, der US 2012/242 138 A1, der JP S61 244602 A und der WO 2011/096805 A1 bekannt.

Aus der DE 44 25 592 A1 ist insbesondere die Fertigung eines Kernteils, das mit einem vorgefertigten Prepreg aus faserverstärktem Kunstharz im Wesentlichen wendelartig umwickelt wird, offenbart.

Allerdings weisen die bestehenden und bekannten Drahtreifenfelgen immer Nachteile in puncto Qualität, Gewicht, Festigkeit, Komfort und gewünschte Herstellgeschwindigkeit auf.

Es ist aber die Aufgabe der vorliegenden Erfindung hier eine Verbesserung zur Verfügung zu stellen. Insbesondere soll die Qualität erhöht werden, die Festigkeit verbessert werden und erfindungsgemäße Drahtreifenfelgen schneller herstellbar sein.

Dadurch sollen die Kosten minimiert werden und eine automatische Fertigung erleichtert werden.

Diese Aufgabe wird bei einer Drahtreifenfelge, die auch als Clincher-Felge bezeichnet werden kann durch die Merkmale des Anspruchs 1 gelöst. Der Unterschied zum Stand der Technik in Form der DE 44 25 592 A1 wird das Merkmal des kennzeichnenden Teils des Anspruchs 1 angesehen.

Die Erfindung betrifft auch ein Verfahren zum Herstellen einer Drahtreifenfelge für ein Fahrrad nach Anspruch 2, mit den Schritten a) Belegen von mindestens einem Außenkern mit Verstärkungsfasern, um eine Innenhülse auszuformen, wobei das Belegen bei linearer Erstreckung des Außenkerns vorgenommen wird und der belegte Außenkern erst bei oder nach der Belegung in eine gebogene Form oder mehrere gebogene Formen gebracht wird, und b) zumindest abschnittsweises Umflechten der Innenhülse mit einer Flechtlage oder mehreren Flechtlagen.

Vorteilhafte Ausführungsformen sind in den Unteransprüchen beansprucht und nachfolgend näher beschrieben.

So ist es von Vorteil, wenn der Außenkern als verlorener Außenkern ausgebildet ist oder wird und/oder ein radial innerhalb davon angeordneter Innenkern als verlorener oder verbleibender Innenkern ausgebildet ist oder wird.

Es ist zweckmäßig, wenn der verlorene Innenkern aus einem thermoplastischem Werkstoff gebildet ist oder wird und/oder der verlorene Außenkern aus Kunststoff gebildet ist oder wird.

Wenn das Belegen des Außenkerns mittels einer Bewicklung mit einem Faden oder einem vorgefertigten Halbzeug, wie einem Taylored Fiber Placement (TFP) Halbzeug, eine Fiber Patch Placement (FPP) Halbzeug, einem Non-crimp fabric (NCF), einem Gewebe oder einem Schmalbandtextil durchgeführt ist oder wird, so können effiziente Herstellverfahren genutzt werden.

Für den Ablauf in der Herstellung ist es auch von Vorteil, wenn die Belegung des Außenkerns (6) mittels eines Bedeckens mit einem vorgefertigten Halbzeug wie einem Taylored Fiber Placement (TFP) Halbzeug, einem Fiber Patch Placement (FPP) Halbzeug, einem Non-crimp Fabric (NCF), einem Gewebe oder einem Schmalbandtextil stattfindet, etwa über ein Einschlagen.

Auch ist es von Vorteil, wenn vor dem Umflechten der Innenhülse ein Zusatzkern in Anlage an die Belegung gebracht wird und dann die Kombination aus der Innenhülse, der Belegung und dem Zusatzkern im Schritt b) umflochten wird.

Es ist zweckmäßig, wenn der Innenkern mit zumindest einer Flechtlage umflochten wird, dann der belegte Außenkern auf die Flechtlage aufgelegt wird und in Fortführung der Flechtlage ebenfalls umflochten wird, wobei in einem Sprungbereich von Innen nach Außen die Flechtlage durchtrennt wird und während des andauernden Umflechtens des umwickelten Außenkerns um mehr als den 360°-Radumfang umflochten wird.

Wenn nach dem Schritt b) mittels eines spanabhebenden Verfahrens ein radial äußeres Flächenteil entfernt ist oder wird, um die Felgenhörner (14) in deren Form vorzubestimmen, so kann der Ablauf besonders effizient durchgeführt werden.

Es ist von Vorteil, wenn in der Flechtlage mehrere, vorzugsweise ca. 45°-Fäden und wenigstens ein ca. 0°-Faden kombiniert sind oder werden und/oder im Bereich eines künftigen Nippelbettes eine zusätzliche Verstärkung in Form eines durchgehenden oder unterbrochenen Faserlage, etwa nach Art eines Gewebes, eingelegt ist oder wird.

Die Erfindung betrifft mit anderen Worten eine Felge mit einer Innenhülse, die eine beispielsweise lückenlose Oberfläche aufweist, beinhaltend einen vorzugsweise einzigen Faden oder mehrere Fäden, wobei der Faden so angeordnet ist oder die Fäden so angeordnet sind, dass er zumindest eine Wicklung ausformt oder sie mehrere Wicklungen ausformen, wobei die Innenhülse im Bereich von zwei Felgenhörnern und radial nach innen weisenden Bremsflankenbereichen und einem diese verbindenden Stützbereich von einer Außenhülse aus einer Flechtlage oder von einer Außenhülse aus mehreren Flechtlagen umgeben ist, wobei vorzugsweise jener zwischen den aufeinander zugerichteten Enden der Felgenhörner vorhandene Teil der Außenhülse sowie der Innenhülse fehlt, insbesondere herausgeschnitten ist. Unter Bremsflankenbereichen werden die Bereiche an den Seiten der Felge verstanden, die herkömmlicherweise zum in Kontakt gelangen mit Bremsbelägen vorbereitet sind. Natürlich können auch Scheibenbremsen eingesetzt werden, die dann ein Kontaktieren der Bremsflankenbereiche von Bremsbelägen unnötig werden lassen.

Die Erfindung betrifft letztlich auch ein Verfahren zum Herstellen einer (solchen) Drahtreifenfelge für ein Fahrrad, mit den Schritten a) Umwickeln eines Außenkerns mit einem bspw. einzigen Faden oder bspw. mehreren Fäden, um eine Innenhülse auszuformen, wobei das Umwickeln bei linearer / gerader Erstreckung des Außenkerns vorgenommen wird und der umwickelte Außenkern erst bei oder nach der Umwicklung in eine gebogene Form gebracht wird, und b) zumindest abschnittsweises Umflechten der Innenhülse mit einer Flechtlage oder mehreren Flechtlagen.

Vorteilhafte Ausführungsformen sind in den Unteransprüchen beansprucht und werden nachfolgend näher erläutert.

So ist es von Vorteil, wenn der Außenkern als verlorener Außenkern ausgebildet ist oder wird und/oder ein radial innerhalb daran angeordneter Innenkern als verlorener Innenkern ausgebildet ist oder wird. Die verlorenen Kerne können dann aus dem Vorprodukt entfernt werden, bspw. kann durch ein Aufschneiden der äußeren Lagen oder der äußeren Lage der radial äußere Kern, also der Außenkern entnommen werden und vorzugsweise wieder verwendet werden, wobei der vollständig von einer Flechtlage umgebene radial innere Kern, also der zusätzlich zur Innenhülse umwickelte Innenkern, bspw. aus Wachs oder anderen auswaschbaren / auslösbaren Materialeien (beispielsweise Kunststoff, etwa EPS / Polystyrol enthaltend), ausgeschmolzen wird.

Es ist nämlich gerade von Vorteil, wenn der verlorene Innenkern aus auswaschbarem Material, wie etwa Wachs gebildet ist oder wird und/oder der verlorene Außenkern aus Kunststoff, wie Silikon gebildet ist oder wird. Jeder der beiden Werkstoffe hat sich für den jeweiligen Kern bewährt.

Es ist von Vorteil, wenn vor dem Umflechten der Innenhülse ein Zusatzkern in Anlage an die Umwicklung gebracht wird und dann die Kombination aus der Innenhülse, der Umwicklung und dem Zusatzkern im Schritt b) umflochten wird.

Es ist zweckmäßig, wenn der Innenkern mit zumindest einer Flechtlage umflochten wird, dann der umwickelte Außenkern auf die Flechtlage aufgelegt wird und in Fortführung der Flechtlage ebenfalls umflochten wird, wobei in einem Sprungbereich von Innen nach Außen die Flechtlage durchtrennt wird und während des andauernden Umflechtens des umwickelten Außenkerns um mehr als den 360°-Radumfang umflochten wird.

Um eine adäquate Felgenhorngeometrie zu erreichen, ist es von Vorteil, wenn nach dem Schritt b) mittels eines spanabhebenden Verfahrens, wie eines Fräsens oder Schleifens, ein radial äußeres Flächenteil entfernt ist oder wird, um die Felgenhörner in deren Form präzise vorzubestimmen / festzulegen.

Es ist zweckmäßig, wenn in der Flechtlage oder den Flechtlagen mehrere vorzugsweise ca. 45°-Fäden (wobei der Winkel in Bezug auf die Umfangsrichtung definiert ist) und wenigstens ein ca. 0°-Faden (wobei der Winkel in Bezug auf die Umfangsrichtung definiert ist) kombiniert sind oder werden.

Die Erfindung betrifft auch eine Drahtreifenfelge für ein Fahrrad, wobei im Bereich eines künftigen Nippelbettes eine zusätzliche Verstärkung in Form eines durchgehenden oder unterbrochenen Gewebes eingelegt ist oder wird. Auch können mehrere solcher Gewebe schichtartig übereinander kombiniert werden. Eine zusätzliche Kombination mit 0°-Fasern und/oder trockenen Rovings, also solchen länglichen Konstrukten, die viele Filamente aufweisen, bietet sich an.

Wenn der Außenkern eine Länge im unumwickelten Zustand hat, die größer oder gleich der Drahtreifenfelge ist und vorzugsweise ein Endlosprofil ist, so kann ein effizientes auf Vorrat produzieren der Innenkerne und damit auch der Innenhülsen - losgelöst von der Produktion des die Außenhülse enthaltenen Drahtreifenfelge - bewerkstelligt werden.

Weiter ist es von Vorteil, wenn der Außenkern auf seiner radialen Außenseite angepfeilt ausgebildet ist und/oder auf seiner radialen Innenseite eine die spätere Schlauchauflagefläche definierende konvexe oder ballige, gerundete Kontur besitzt.

Das Verfahren ist auch dadurch weiter bildbar, wenn auf dem Außenkern ein trockner Kohlefaser-Roving endlos aufgewickelt wird.

Ferner ist es in diesem Zusammenhang zweckmäßig, wenn der umwickelte Außenkern selbst aufgewickelt wird. Der Platzbedarf in der Montagehalle wird dadurch verringert.

Es hat sich bewährt, wenn der umwickelte Außenkern in einem U- oder V-förmigen Profil geführt wird. Eine präzise Umwicklung mit bspw. Kohlefasern enthaltenden etwa trockenen Rovings wird dann vereinfacht.

Es ist daher auch von Vorteil, wenn der Faden oder die Fäden der Flechtlage oder der Flechtlagen und/oder der Wickelage oder der Wickelagen aus Kohlenstoff aufgebaut sind, etwa nach Art von Rovings oder Filamenten. Natürlich ist auch ein singulärer Faden denkbar.

Die Erfindung wird auch nachfolgend mit Hilfe einer Zeichnung näher erläutert. Dort ist ein Querschnitt eines Ausschnitts einer vollständig geschlossenen ringförmigen Radreifenfelge gemäß einer ersten Ausführungsform dargestellt.

Die Figur ist lediglich schematischer Natur und dient nur dem Verständnis der Erfindung.

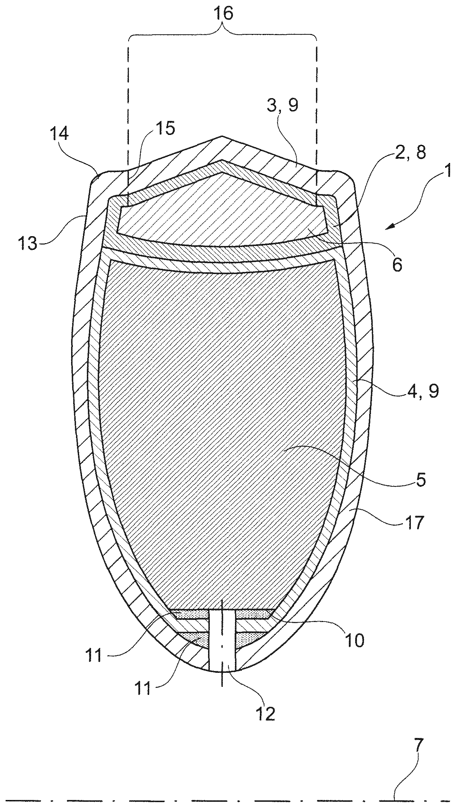

Die in der Fig. 1 dargestellte erfindungsgemäße Drahtreifenfelge 1 ist für das Halten eines Schlauches und eines Drahtreifenmantels vorgesehen. Sie besitzt eine Innenhülse 2, die durch die lückenlose Aufwicklung eines Fadens oder mehrerer Fäden, vorzugsweise enthaltend oder vollständig aufgebaut aus Kohlenstoff definiert ist. Die Fäden oder der Faden selber ist nicht im Detail in der Zeichnung zu erkennen.

Die Innenhülse 2 ist vollständig von einer Außenhülse 3 umgeben. Die Außenhülse 3 schließt eine Deckhülse 4 ebenfalls ein. Diese Deckhülse 4 ist optional. Die Deckhülse 4 ihrerseits schließt einen Innenkern 5 ein. Der Innenkern 5 wird jedenfalls, selbst wenn die Deckhülse 4 nicht vorhanden ist, von der Außenhülse 3 vollständig umgeben, nämlich unter Miteinschließens der Innenhülse 2.

Die Innenhülse 2 umgibt ihrerseits einen Außenkern 6. Der Innenkern 5 ist radial innerhalb des Außenkerns 6 angeordnet, da die gesamte Drahtreifenfelge 1 um eine Symmetrieachse 7, die als Rotationsachse fungiert, umlaufend geschlossen ist. Die Innenhülse 2 ist durch eine Wicklung, die mit dem Bezugszeichen 8 angedeutet ist, gebildet. Die Außenhülse 3 und, so sie vorhanden ist, auch die Deckhülse 4, ist durch eine Flechtung 9 hergestellt. Sowohl die Wicklung 8 kann ein- oder mehrlagig sein, als auch die Flechtung 9.

Sowohl für die Wicklung 8, als auch für die Flechtung 9 werden trockene Fasern, Filamente und/oder Rovings eingesetzt.

Auf der radialen Innenseite 10 des Innenkerns 5 ist zumindest eine Verstärkungslage 11 vorhanden. Im vorliegenden Ausführungsbeispiel sind drei Verstärkungslagen 11 aus trockenen Kohlefasern eingesetzt. Die Verstärkungslage kann aus einem trockenen Kohlefaserroving oder auch einem Gewebe ausgeführt sein. In diesem Bereich, und angrenzend auch die Außenhülse 3 durchdringend, ist ein Nippelloch 12 zum späteren Hindurchführen eines nicht dargestellten Nippels, zwecks Befestigung einer nicht dargestellten Speiche, vorhanden. Durch diese Gewebelage 11 wird eine Verstärkung geschaffen. Das Gewebe bzw. die Gewebelage 11 kann nur im Bereich eines einzigen Nippelloches 12 vorhanden sein, oder aber mehrere Nippellöcher 12 und vorzugsweise alle Nippellöcher beinhalten. Die im Bereich des Nippelbettes eingesetzte Gewebeverstärkung wird durch eine oder mehrere Gewebelagen 11 gebildet.

Der Außenkern 6 ist aus einem Elastomer, vorzugsweise Kautschuk / Gummi oder Siolikon, oder Polymer, weiter vorzugsweise EPS gefertigt und ist ein Abschnitt einer "Endlosstange". Der Innenkern 5 wird kontinuierlich umwickelt. Die Umwicklung wird zusammen mit dem Innenkern bei Bedarf auf die richtige Länge abgeschnitten. Diese Länge ist bestimmt durch den Umfang der gewünschten fertigen Drahtreifenfelge 1.

Auf beiden Seiten der Drahtreifenfelge 1 sind Bereiche 13 gekennzeichnet, die als Bremsflanken agieren. Von den Bremsflanken radial nach außen und sich auch aufeinander zu erstreckend, sind Felgenhörner 14 ausgebildet. Die endgültige Geometrie der Felgenhörner 14 ist an ihrer aufeinander zugewandten Endfläche durch strichlierte Linien angedeutet. Entlang dieser strichlierten Linien, zum Ausbilden der Endflächen 15 derselben Hörner 14, wird ein erodierender Vorgang, wie ein spanabhebender Vorgang, wie ein Fräsvorgang eingesetzt. Dadurch kann ein Verlustabschnitt 16 entfernt werden. Der Verlustabschnitt 16 umfasst also einen Bestandteil der Innenhülse 2 und einen Bestandteil der Außenhülse 3. Ist der Verlustabschnitt 16 entfernt, kann auch der Außenkern 6 entfernt werden.

Auf der radialen Innenseite der beiden Bremsflanken 13 schließt sich ein Stützbereich 17 an. Durch diesen Stützbereich 17 verläuft auch das Nippelloch 12.

Der Verlustabschnitt 16 ist ein radial äußeres Flächenteil.

Um den Innenkern 5 zu entfernen, wird kein weiterer Verlustabschnitt entnommen, sondern vielmehr wird die Temperatur erhöht, um den aus Wachs gebildeten Innenkern 5 auszuschmelzen. Dabei fließt das Wachs bspw. durch die vorher gebohrten Nippellöcher 12 aus.

Das Herstellen der Drahtreifenfelgen kann also wie folgt ablaufen.

Mit einer bereits bekannten "Steigertechnik" wird ein zusammenhängender Wachskern als Innenkern 5 gegossen. Wahlweise kann anstelle des Wachses ein auslösbares / auswaschbares Material, wie z.B. "Aquacore" oder EPS (d.h. expandierendes Polystyrol) verwendet werden. Als nächstes wird der Innenkern 5 mit Kohlenfasern umflochten, wobei Fäden 90° zueinander und/oder zur Umfangsrichtung eingesetzt werden und vorzugsweise ein oder mehrere Fäden in Umfangsrichtung verlaufen. Es bildet sich die Deckhülse 4.

Parallel dazu wird der Außenkern 6 aus Silikon als gerades, linear verlaufendes Element von einem flachen Kohlenstoffband derart umwickelt, dass sich die Innenhülse 2 mit lückenloser Oberfläche bildet. Auch hier können 0°-Fasern zusätzlich eingebracht werden.

Die Innenhülse 2 mit ihrem darin enthaltenen Außenkern 6 wird auf die Oberfläche, nämlich die radiale Außenseite der äußersten Flechtlage der Deckhülse 4, welche den Innenkern 5 beinhaltet oder auf den Innenkern 5 direkt (wenn keine Deckhülse 4 vorhanden ist) aufgesetzt. Der Innenkern 5 ist sinnvollerweise, wie bereits erläutert, umflochten und bildet die Deckhülse 4, welche nun also direkt an der Innenhülse 2, an ihrer radialen Innenseite, anliegt. Die Innenhülse 2 und die Deckhülse 4 werden nun ihrerseits beide umflochten, wobei wiederum ca. 90°-Fäden und ca. 0°-Fäden sinnvoll kombinierbar sind, derart, dass sich die Außenhülse 3 bildet.

Die Deckhülse 4 ist optional, also kann der Innenkern 5 in direkter Anlage mit der radialen Innenseite einer Außenoberfläche der Innenhülse 2 gebracht werden und dann die Flechtung 9, also die Außenhülse 3, ohne vorhandener Deckhülse 4 ausgeformt werden.

Jedenfalls wird danach die geometrisch überwiegend bestimmte Drahtreifenfelge 1 in eine RTM-Form eingebracht, die Wicklungen und Flechtungen mit Harz infiltriert werden, wobei unter Druckerhöhung und/oder Temperaturerhöhung ein Aushärten erfolgt.

Nach Entnehmen des Vorprodukts der Drahtreifenfelge 1 werden die Schnitte zum Herauslösen des Verlustabschnittes 16 durchgeführt. Dann wird der Außenkern 6 entnommen. Während des Temperatur- und/oder Druckerhöhens ist bereits der Innenkern 5 ausgeschmolzen worden. Natürlich kann auch zu einem späteren Zeitpunkt der Innenkern 5 ausgeschmolzen werden, in Abhängigkeit von der Schmelztemperatur und der Aushärtetemperatur.

### Bezugszeichenliste

- 1: Drahtreifenfelge
- 2: Innenhülse
- 3: Außenhülse
- 4: Deckhülse
- 5: Innenkern
- 6: Außenkern
- 7: Symmetrieachse
- 8: Wicklung
- 9: Flechtung
- 10: radiale Innenseite des Innenkerns
- 11: Gewebelage
- 12: Nippelloch
- 13: Bremsflanken
- 14: Felgenhorn
- 15: Endfläche
- 16: Verlustabschnitt
- 17: Stützbereich

## Patentansprüche

1. Drahtreifenfelge (1) für ein Fahrrad, mit einer Innenhülse (2) aus zumindest einem Faden, wobei der zumindest eine Faden so angeordnet ist, dass er eine Wicklung (8) ausformt, wobei die Innenhülse (2) einen Stoß aufweist, an welchem die Enden vereinigt sind, **dadurch gekennzeichnet, dass** die Innenhülse (2) im Bereich von zwei Felgenhörnern (14) und davon radial nach innen weisenden Bremsflankenbereichen (13) und einem diese verbindenden Stützbereich (17) von einer Außenhülse (3) aus einer Flechtlage umgeben ist.

2. Drahtreifenfelge (1) nach Anspruch 1, **dadurch gekennzeichnet, dass** in der Flechtlage mehrere, vorzugsweise ca. 45°-Fäden und wenigstens ein ca. 0°-Faden kombiniert sind und/oder im Bereich eines künftigen Nippelbettes eine zusätzliche Verstärkung in Form einer durchgehenden oder unterbrochenen Faserlage, etwa nach Art eines Gewebes, eingelegt ist.

3. Verfahren zum Herstellen einer Drahtreifenfelge (1) für ein Fahrrad nach einem der vorhergehenden Ansprüche, mit dem Schritt a) Belegen von mindestens einem Außenkern (6) mit Verstärkungsfasern, um eine Innenhülse (2) auszuformen, wobei das Belegen bei linearer Erstreckung des Außenkerns (6) vorgenommen wird und der belegte Außenkern (6) erst bei oder nach der Belegung in eine gebogene Form oder mehrere gebogene Formen gebracht wird, **dadurch gekennzeichnet, dass** in einem weiteren Schritt b) die Innenhülse (2) zumindest abschnittsweise mit einer Flechtlage oder mehreren Flechtlagen umflochten wird.

4. Verfahren nach Anspruch 3, **dadurch gekennzeichnet, dass** der Außenkern (6) als verlorener Außenkern ausgebildet ist oder wird und/oder ein radial innerhalb davon angeordneter Innenkern (5) als verlorener oder verbleibender Innenkern (5) ausgebildet ist oder wird.

5. Verfahren nach Anspruch 4, **dadurch gekennzeichnet, dass** der verlorene Innenkern (5) aus einem thermoplastischem Werkstoff gebildet ist oder wird und/oder der verlorene Außenkern (6) aus Kunststoff gebildet ist oder wird.

6. Verfahren nach einem der Ansprüche 3 bis 5, **dadurch gekennzeichnet, dass** das Belegen des Außenkerns (6) mittels einer Bewicklung mit einem Faden oder einem vorgefertigten Halbzeug, wie einem Taylored Fiber Placement (TFP) Halbzeug, einem Fiber Patch Placement (FPP) Halbzeug, einem Non-crimp fabric (NCF), einem Gewebe oder einem Schmalbandtextil durchgeführt ist oder wird.

7. Verfahren nach einem der Ansprüche 3 bis 6, **dadurch gekennzeichnet, dass** die Belegung des Außenkerns (6) mittels eines Bedeckens mit einem vorgefertigten Halbzeug wie einem Taylored Fiber Placement (TFP) Halbzeug, einem Fiber Patch Placement (FPP) Halbzeug, einem Non-crimp Fabric (NCF), einem Gewebe oder einem Schmalbandtextil stattfindet.

8. Verfahren nach einem der Ansprüche 4 bis 7, **dadurch gekennzeichnet, dass** der Innenkern (5) mit zumindest einer Flechtlage umflochten wird, dann der belegte Außenkern (6) auf die Flechtlage aufgelegt wird und in Fortführung der Flechtlage ebenfalls umflochten wird, wobei in einem Sprungbereich von Innen nach Außen die Flechtlage durchtrennt wird und während des andauernden Umflechtens des umwickelten Außenkerns (6) um mehr als den 360°-Radumfang umflochten wird.

9. Verfahren nach einem der Ansprüche 3 bis 8, **dadurch gekennzeichnet, dass** nach dem Schritt b) mittels eines spanabhebenden Verfahrens ein radial äußeres Flächenteil entfernt ist oder wird, um die Felgenhörner (14) in deren Form vorzubestimmen.

10. Verfahren nach einem der Ansprüche 3 bis 9, **dadurch gekennzeichnet, dass** in der Flechtlage mehrere, vorzugsweise ca. 45°-Fäden und wenigstens ein ca. 0°-Faden kombiniert sind oder werden und/oder im Bereich eines künftigen Nippelbettes eine zusätzliche Verstärkung in Form einer durchgehenden oder unterbrochenen Faserlage, etwa nach Art eines Gewebes, eingelegt ist oder wird.

## Claims

1. A wired-on tyre rim (1) for a bicycle, comprising an inner sleeve (2) made of at least one thread, the at least one thread being arranged to form a coil (8), the inner sleeve (2) having a joint at which the ends are joined, **characterized in that** the inner sleeve (2) is surrounded by an outer sleeve (3) made of a woven layer in the region of two rim flanges (14) and brake flank regions (13) facing radially inward therefrom and a support region (17) connecting them.

2. Wired-on tyre rim (1) according to claim 1, **characterized in that** several, preferably approx. 45° threads and at least one approx. 0° thread are combined in the woven layer, and/or an additional reinforcement in the form of a continuous or interrupted fiber layer, for example in the manner of a fabric, is inserted in the region of a future nipple bed.

3. Method for producing a wired-on tyre rim (1) for a bicycle according to one of the preceding claims, comprising the step a) covering at least one outer core (6) with reinforcement fibers to form an inner sleeve (2), wherein covering is carried out with linear extension of the outer core (6) and the covered outer core (6) is not brought into a curved shape or several curved shapes until during or after covering, **characterized in that** in a further step b) a woven layer or several layers are at least in sections woven around the inner sleeve (2).

4. Method according to claim 3, **characterized in that** the outer core (6) is or is going to be formed as a lost outer core and/or an inner core (5) arranged radially within it is or is going to be formed as a lost or remaining inner core (5).

5. Method according to claim 4, **characterized in that** the lost inner core (5) is or is going to be formed of a thermoplastic material and/or the lost outer core (6) is or is going to be formed of plastic.

6. Method according to one of claims 3 to 5, **characterized in that** covering of the outer core (6) is or is going to be carried out by means of coiling with a thread or a prefabricated semi-finished product such as a Taylored Fiber Placement (TFP) semi-finished product, a Fiber Patch Placement (FPP) semi-finished product, a Non-crimp fabric (NCF), a fabric or a narrow band textile.

7. Method according to one of claims 3 to 6, **characterized in that** covering the outer core (6) is performed by means of coating with a prefabricated semi-finished product such as a Taylored Fiber Placement (TFP) semi-finished product, a Fiber Patch Placement (FPP) semi-finished product, a Non-crimp Fabric (NCF), a fabric or a narrow band textile.

8. Method according to one of claims 4 to 7, **characterized in that** at least one woven layer is woven around the inner core (5), then the covered outer core (6) is laid on the woven layer and in continuation of the woven layer also becomes wrapped by weaving, wherein the woven layer is cut in a jumping region from inside to outside, and during the continuous weaving of the wrapped outer core (6) becomes wrapped by weaving by more than the 360° wheel circumference.

9. Method according to one of claims 3 to 8, **characterized in that** after step b) a radially outer surface part is or is going to be removed by means of a cutting method to pre-determine the rim flanges (14) in their shape.

10. Method according to one of claims 3 to 9, **characterized in that** several, preferably approx. 45° threads and at least one approx. 0° thread are or are going to be combined in the woven layer and/or an additional reinforcement in the form of a continuous or interrupted fiber layer, for example in the manner of a fabric, is or is going to be inserted in the region of a future nipple bed.

## Revendications

1. Jante de pneu (1) pour une bicyclette, avec une gaine intérieure (2) constituée d'au moins un fil, ledit au moins un fil étant disposé de manière à former un enroulement (8), la gaine intérieure (2) présentant une jointure où les extrémités sont réunies, **caractérisé en ce que** dans les zones formées par deux rebords de jante (14), par les parties de flancs de freinage (13) qui s'étendent radialement vers l'intérieur depuis ceux-ci et par une partie de maintien (17) qui les relie, la gaine intérieure (2) est entourée d'une gaine extérieure (3) constituée d'une seule couche tressée.

2. Jante de pneu (1) selon la revendication 1, **caractérisée en ce que** plusieurs fils, préférentiellement des fils à 45° env. et au moins un fil à 0° env. sont combinés dans la couche tressée et/ou **en ce que** dans la zone d'un futur emplacement de valve un renforcement complémentaire est mis en place sous la forme d'une couche de fibres continue ou interrompue, à la façon d'un tissu.

3. Procédé de fabrication d'une jante de pneu (1) pour une bicyclette selon l'une des revendications précédentes, comprenant l'étape a) : montage d'au moins un âme externe (6) avec des fibres de renforcement, afin de former une gaine intérieure (2), le montage étant effectué dans le sens d'extension linéaire de l'âme externe (6) et l'âme externe (6) montée n'étant ajustée pour présenter une forme courbe ou plusieurs formes courbes que lors du montage ou après celui-ci, **caractérisé en ce que** lors d'une autre étape b), la gaine intérieure (2) est au moins partiellement tressée avec une couche tressée ou plusieurs couches tressées.

4. Procédé selon la revendication 3, **caractérisé en ce que** l'âme externe (6) est ou sera formée comme âme externe perdue et/ou une âme intérieure (5) disposée radialement à l'intérieur est ou sera formée comme âme intérieure (5) perdue ou restante.

5. Procédé selon la revendication 4, **caractérisé en ce que** l'âme intérieure (5) perdue est ou sera en matière thermoplastique et/ou l'âme externe (6) perdue est ou sera en matière plastique.

6. Procédé selon l'une des revendications 3 à 5, **caractérisé en ce que** le montage de l'âme externe (6) est ou sera effectué au moyen d'un enroulement avec un fil ou une préforme préfabriquée, telle qu'une préforme Tailored Fiber Placement (TFP), une préforme Fiber Patch Placement (FPP), un tissu non tissé (NCF), un tissu ou un textile à bande étroite.

7. Procédé selon l'une des revendications 3 à 6, **caractérisé en ce que** le montage de l'âme externe (6) est effectué par couverture avec une préforme préfabriquée, telle qu'une préforme Tailored Fiber Placement (TFP), une préforme Fiber Patch Placement (FPP), un tissu non tissé (NCF), un tissu ou un textile à bande étroite.

8. Procédé selon l'une des revendications 4 à 7, **caractérisé en ce que** l'âme intérieure (5) est tressée avec au moins une couche tressée, l'âme externe (6) montée est ensuite appliquée sur la couche tressée avant que la couche tressée soit elle aussi tressée, la couche tressée étant coupée dans une zone de passage de l'intérieur vers l'extérieur et étant tressée autour de plus des 360° de la circonférence de roue pendant le tressage continu de l'âme externe (6) enroulée.

9. Procédé selon l'une des revendications 3 à 8, **caractérisé en ce qu'**après l'étape b), une partie de surface radialement extérieure est ou sera retirée au moyen d'un procédé à enlèvement de copeaux pour déterminer la forme des rebords de jante (14).

10. Procédé selon l'une des revendications 3 à 9, **caractérisé en ce que** plusieurs fils, préférentiellement des fils à 45° env. et au moins un fil à 0° env. sont ou seront combinés dans la couche tressée et/ou **en ce que** dans la zone d'un futur emplacement de valve un renforcement complémentaire est ou sera mis en place sous la forme d'une couche de fibres continue ou interrompue, à la façon d'un tissu.
